# EUROPÄISCHE PATENTSCHRIFT

(11) **EP 1 627 776 B1**
(45) Veröffentlichungstag und Bekanntmachung des Hinweises auf die Patenterteilung: **10.10.2007**
(21) Anmeldenummer: 05017316.0
(22) Anmeldetag: 09.08.2005
(51) Int. Cl.: B60R 13/02, F16B 5/06

(54) **Fahrzeugtüre eines Personenkraftwagens mit einem Clip**
Vehicle door with a clip
Porte de véhicule avec une agrafe

(30) Priorität: 18.08.2004 DE 102004039922
(43) Veröffentlichungstag der Anmeldung: 22.02.2006
(73) Patentinhaber: Bayerische Motoren Werke Aktiengesellschaft, 80809 München (DE)
(72) Erfinder: Holz, Andreas, 85551 Kirchheim (DE)

(56) Entgegenhaltungen:
- EP-A- 0 696 530
- EP-A- 1 186 787
- US-A- 5 186 517

## Beschreibung

Die Erfindung betrifft die Fahrzeugtüre eines Personenkraftwagens mit einem Rahmenelement, an dem in einer Öffnung ein Clip zum Haltern eines Blendenelements vorgesehen ist.

Bei Fahrzeugtüren der oben genannten Art sind am Rahmenelement mit Clipsen Blendenelemente montiert, mit denen die Außenhaut des zugehörigen Fahrzeugs ästhetisch gestaltet und ferner die gewünschte Aerodynamik und Akustik erzeugt wird. Die am Rahmenelement dazu angeordneten Clipse müssen einfach zu montieren sein. Eine lagegenaue Anordnung der Blendenelemente gewährleisten und darüber hinaus die gehalterten Blendenelemente über die Lebensdauer des Fahrzeugs hinweg dauerhaft am Rahmenelement zurückhalten.

Bei bekannten Fahrzeugtüren werden dazu insbesondere zum Haltern von B-Säulen-Blendenelementen Clips vorgesehen, die zum Ausgleich von Maßtoleranzen an dem Rahmen der Fahrzeugtüre in Langlöchern verschiebbar angeordnet sind. Die Clipse weisen ferner einen den gesamten Clip durchsetzenden Längsschlitz auf, der zum Zusammenbiegen des Clips beim Einrasten am Rahmenelement ausreichend Freiraum bereitstellt.

Die bekannten Clipse sind jedoch vergleichsweise schwer zu montieren, benötigen bei der Montage einen hohen Kraftaufwand und müssen daher mit Montagehilfen platziert und eingefügt werden. Dies führt zu einer vergleichsweise langen Montagezeit und auch zu einem teilweise hohen Nacharbeitsaufwand. Ferner sind an dem am Clip vorgesehenen Längsschlitz Fehlverschraubungen möglich. Ein Einrasten eines bekannten Clips am Rahmenelement ist für einen Werker akustisch nicht wahrnehmbar, was ebenfalls die Gefahr von Fehlmontagen erhöht.

Bekannte Clips eignen sich ferner schlecht zum Ausgleich von Längendehnungen der zugehörigen Blendenelemente unter Wärmeeinfluss.

Schließlich erfüllen die bekannten Clipse auch die akustischen Anforderungen oftmals nicht. Sie sind "akustisch undicht", was bedeutet, dass sich Schallwellen durch das für den Clip am Rahmenelement vorgesehene Loch ins Innere des zugehörigen Fahrzeugs ausdehnen können.

Eine Halteeinrichtung gemäß der Oberbegriff des Anspruch 1 ist aus EP 1186787 bekannt.

Der Erfindung liegt die Aufgabe zugrunde eine Halteeinrichtung der eingangs genannten Art mit einen Clip bereitzustellen, mit dem zugehörige Blendenelemente sicher am Rahmenelement der Fahrzeugtüre gehaltert und dennoch die geforderten Lagertoleranzen bei zugleich geringem Montageaufwand gewährleistet werden können.

Die Aufgabe ist erfindungsgemäß mit einer Halteinrichtung gemäß Anspruch 1 gelöst.

Bevorzugte Ausbildungsformen sind in die Unteransprüche beschrieben.

Die erfindungsgemäße Lösung steht im Gegensatz zu den bisherigen Befestigungen, welche mit einem Clip gestaltet sind, der nur schwer zu verformende, im Wesentlichen starre Klemmbacken aufweist, die in einem zugehörigen Langloch nur mit großem Kraftaufwand verschoben werden können. Erfindungsgemäß sind an einem Clip für eine Fahrzeugtüre eines Personenkraftwagens zwei Federarme vorgesehen, die speziell die Aufgabe des Zentrierens des Clips im zugehörigen Langloch erfüllen. Der erfindungsgemäße Clip kann also in dem Langloch vergleichsweise leicht verschoben werden und ist dennoch während der Montage mit Hilfe der erfindungsgemäßen Federarme an einer vordefinierten Stelle innerhalb des Langlochs positioniert. Die erfindungsgemäßen Federarme bringen es mit sich, dass der Clip mit Klemmbacken gestaltet sein kann, welche den Clip in Abzugsrichtung des zugehörigen Blendenelements zwar sicher am Rahmenelement zurückhalten, dennoch aber nur vergleichsweise geringe Klemmkräfte in Querrichtung des Langloches aufweisen müssen. Die Klemmbacken des erfindungsgemäßen Clips können daher vergleichsweise filigran gestaltet sein, was die Gesamtkonstruktion des Clips vorteilhaft beeinflusst und ferner zu Materialeinsparungen und Vereinfachungen bei der Montage des erfindungsgemäßen Schlitzes führt.

Der erfindungsgemäße Clip ist daher auch mit Klemmbacken gestaltet, mit denen der Clip gegen Herausziehen aus dem Rahmenelement gesichert ist und die als Federarme gestaltet sind, die von einem Schaft des Clips abstehen.

Ferner erlaubt es die erfindungsgemäße Konstruktion des Clips mit zwei Federarmen, dass der Clip an seiner vom Rahmenelement abgewandten Seite mit einer definierten Öffnung zum Einführen einer Schraube, gestaltet ist, wobei die Öffnung einen geschlossenen, im Wesentlichen kreisförmigen Umfang aufweist. Ein Längsschlitz, wie er bei bisherigen Clips für Fahrzeugtüren eines Personenkraftwagens an B-Säulen-Blendenelementen vorgesehen war, kann bei dem erfindungsgemäßen Clip hingegen entfallen. Damit ist die Gefahr von Fehlverschraubungen an dem erfindungsgemäßen Clip erheblich verringert.

Darüber hinaus ist es vorteilhaft, wenn der erfindungsgemäße Clip einen am Rahmenelement anliegenden Kopf aufweist, an dem an der zum Rahmenelement gewandten Unterseite ein um das Langloch umlaufendes Dichtelement ausgebildet ist. Ein solches Dichtelement kann beispielsweise als Dichtlippe gestaltet sein, die beim Einfügen des Clips am Rahmenelement angelegt wird und dort das zugehörige Langloch "akustisch verschließt".

Damit das erfindungsgemäß angeklipste Blendenelement den akustischen Anforderungen genügt, ist es ferner vorteilhaft, wenn an dem Rahmenelement und/oder dem Blendenelement ein um den Clip umlaufendes Dichtelement ausgebildet ist. Dieses Dichtelement verschließt dann (nochmals) die Öffnung des Langlochs und vermindert damit eine Schallfortpflanzung durch das Langloch hindurch. So kann beispielsweise an dem Blendenelement ein Dichtwulst ausgeformt sein, der um den erfindungsgemäßen Clip herum im montierten Zustand des zugehörigen Blendenelements am Rahmenelement anliegt.

Nachfolgend wir ein Ausführungsbeispiel einer erfindungsgemäßen Fahrzeugtüre mit einem zugehörigen Clip anhand der beigefügten schematischen Zeichnungen näher erläutert. Es zeigt:
- Fig. 1: eine perspektivische Ansicht eines Clips gemäß dem Stand der Technik,
- Fig. 2: den Schnitt I-I gemäß Fig. 1 durch den Clip und ein zugehöriges Rahmenelement,
- Fig. 3: den Schnitt III-III in Fig. 2,
- Fig. 4: eine perspektivische Ansicht eine Ausführungsbeispiels eines erfindungsgemäßen Clips,
- Fig. 5: den Schnitt V-V in Fig. 4 und
- Fig. 6: den Schnitt VI-VI in Fig. 5.

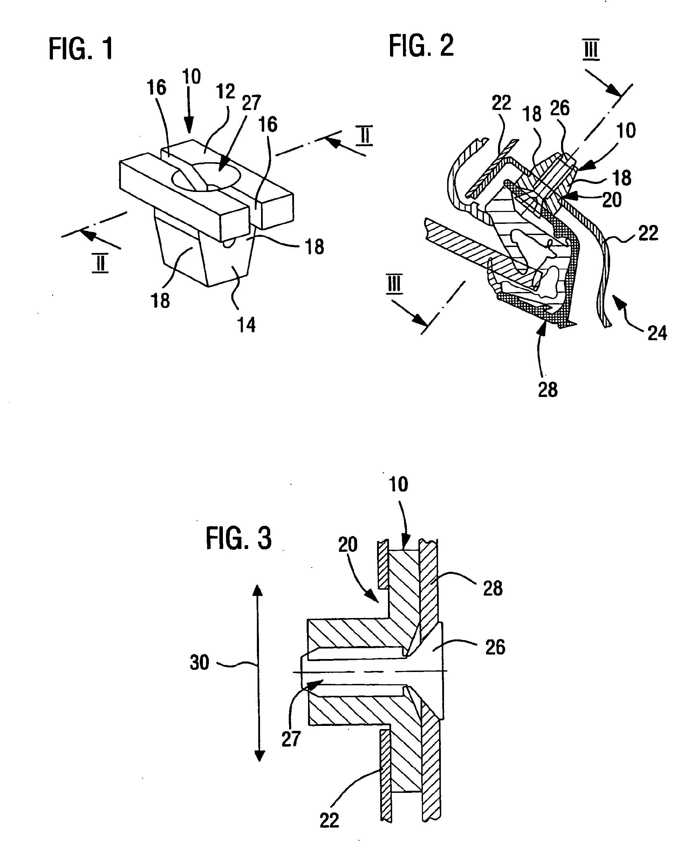

In Fig. 1 ist ein Clip 10 gemäß dem Stand der Technik dargestellt, der einen von einem Kopf 12 abstehenden Körper 14 aufweist. Der Kopf 12 ist im Wesentlichen plattenförmig mit einem rechteckigen Umriss, der in Längsrichtung von einem Längsschlitz 16 durchsetzt ist. Der Längsschlitz 16 ist in den Körper 14 hinein fortgeführt, so dass die durch den Längsschlitz 16 gebildeten beiden Hälften des Kopfes 12 grundsätzlich geringfügig federnd bewegt werden können. Durch das Einfedern des Kopfes 12 und des oberen Abschnitts des Körpers 14 können zwei Klemmbacken 18 zueinander bewegt werden, die an den voneinander abgewandten Seitenflächen des Körpers 14 ausgebildet sind.

Der derartige Clip 10 kann mit seinen zusammengedrängten Klemmbacken 18 in ein Langloch 20 eingefügt werden, das an einem Rahmenelement 22 einer in Fig. 2 abschnittsweise dargestellten Fahrzeugtüre 24 ausgebildet ist. An dem im Rahmenelement 22 eingesetzten Clip 10 wird dann mit Hilfe eines Bolzens 26, der in einer Öffnung 27 in der Mitte des Längsschlitzes 16 eingeschraubt ist, ein Blendenelement 28 befestigt, mit dem das Rahmenelement 22 abgedeckt ist.

Damit insbesondere während der Montage des Blendenelements 28 am Rahmenelement 22 Maßtoleranzen der zugehörigen Bauteile ausgeglichen werden können, ist der Clip 10 mit seinem Klemmbacken 18 im Langloch 20 in einer Längsrichtung 30 des Rahmenelements 22 grundsätzlich geringfügig verschiebbar.

Wegen der vergleichsweise starren Bauweise des Clips 10 mit seinen Klemmbacken 18 ist jedoch zum Verschieben des Clips 10 im Langloch 20 ein hoher Kraftaufwand erforderlich. Ferner kann es, insbesondere bei einer eventuell fehlerhaften Positionierung des Clips 10 im Langloch 20, zu Fehlverschraubungen des Bolzens 26 hinein in den Längsschlitz 16 kommen.

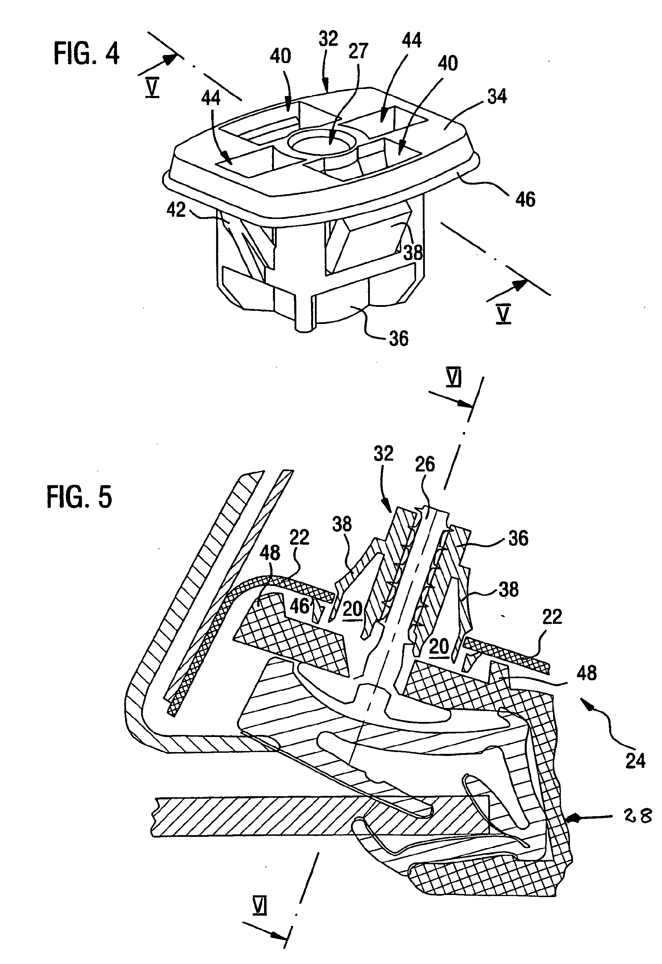

In Fig. 4 ist im Gegensatz zu diesem bekannten Stand der Technik ein Clip 32 dargestellt, der mit einem ebenfalls im Wesentlichen plattenförmigen Kopf 34 und einem davon abstehenden Schaft 36 gestaltet ist. Der Schaft 36 ist im Wesentlichen zylindrisch gestaltet und über seine Mantelfläche hinweg sind insgesamt vier Federarme verteilt, von denen zwei gegenüberliegende Klemmbacken 38 zum zurückhalten des Clips 32 in einem Langloch 20 eines zugehörigen Rahmenelements 22 bilden (siehe Fig. 5).

Die Klemmbacken 38 sind dabei vergleichsweise flexibel gestaltet, wozu in dem plattenförmigen Kopf 34 Öffnungen 40 zum Hindurchführen eines Gesenkes beim Spritzgießen des Clips 32 vorgesehen sind.

An dem Schaft 36 ist mit zwei weiteren einander gegenüberliegenden Federarmen 42 eine Zentrierung gestaltet, mit der der Clip 32 in dem zugehörigen Langloch 20 in Längsrichtung des Langloches 20 zentriert gehalten ist. Auf diese Weise ist der Clip 32 insbesondere während der Montage des Clips 32 und dem nachfolgenden Anbringen des zugehörigen Blendenelements 28 in dem Langloch 20 sicher gehaltert und positioniert. Auch für die Federarme 42 sind im plattenförmigen Kopf 34 zwei Öffnungen 44 zum Einführen eines Gesenkes während eines Spritzgießvorgang vorgesehen.

Die am Clip 32 vorgesehene Öffnung 27 zum Einführen der Schraube 26 weist dabei jedoch einen geschlossenen, im Wesentlichen kreisförmigen Umfang auf.

Damit an der Verbindung des Blendenelements 28 mit dem Rahmenelement 22 gemäß den Figuren 4 bis 6 für die erforderliche akustische Abdichtung gesorgt ist, ist der Kopf 34 an seiner zum Rahmenelement 22 gewandten Unterseite mit einer Dichtlippe 46 versehen, die am Außenumfang des Kopfes 34 umläuft und im eingebauten Zustand des Clips 32 das zugehörige Langloch 20 akustisch abdichtet.

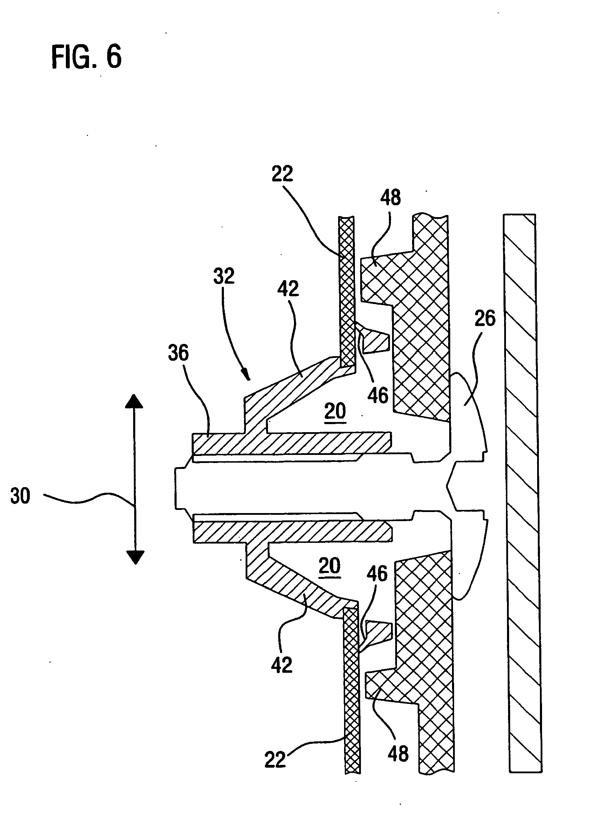

Ferner ist an dem Blendenelement 28 gemäß den Figuren 4 bis 6 (siehe insbesondere Figuren 5 und 6) ein im montierten Zustand ebenfalls das Langloch 20 umgebender Dichtwulst 48 ausgebildet.

### Bezugszeichenliste:

- 10: Clip
- 12: Kopf
- 14: Körper
- 16: Längsschlitz
- 18: Klemmbacken
- 20: Langloch
- 22: Rahmenelement
- 24: Fahrzeugtüre
- 26: Bolzen
- 27: Öffnung
- 28: Blendenelement
- 30: Längsrichtung
- 32: Clip
- 34: Kopf
- 36: Schaft
- 38: Klemmbacke
- 40: Öffnung
- 42: Federarm
- 44: Öffnung
- 46: Dichtlippe
- 48: Dichtwulst

## Patentansprüche

1. Halteeinrichtung mit einem Clip (32) zum Haltern eines Blendenelements (28) an einem Rahmenelement (22) einer Fahrzeugtüre eines Personenkraftwagens, wobei der Clip (32) vier jeweils paarweise gegenüber abstehende Federarme (38, 42) sowie einen radial erweiterten Kopf (34) aufweist, mit einem Langloch (20) im Rahmenelement (22), in das der Clip (32) in eine Lage einsteckbar ist, in der gegenüber angeordnete, als Klemmbacken (38) ausgebildeten Federarme den Randbereich des Langloches (20) auf der von dem Kopf (34) abgewandten Seite hintergreifen, und der Clip (32) mit einem Bauteil (26) verbindbar ist, das mit dem Blendenelement (28) zusammen wirkend das Blendenelement (28) an dem Rahmenelement (22) festhält, **dadurch gekennzeichnet, dass** der Clip (32) einen Schaft (36) mit einer axialen, in Umfangsrichtung kreisförmig geschlossenen Öffnung (27) aufweist, in die eine das Bauteil bildende Schraube (26) einschraubbar ist, die mit ihrem Gewinde durch eine Durchgangsöffnung im Blendenelement (28) hindurch gesteckt und axial in die Öffnung (27) eingeschraubt über den zum Gewinde radial erweiterten Schraubenkopf der Schraube (26) das Blendenelement (28) an dem Rahmenelement (22) festhält und von dem Schaft (36) die Federarme (38, 42) abstehen, von denen die beiden anderen gegenüber angeordneten Federarme (42) den Clip (32) in Längsrichtung des Langloches (20) zentrieren.

2. Halteeinrichtung nach Anspruch 1, **dadurch gekennzeichnet, dass** an der zum Rahmenelement (22) gewandten Unterseite des Kopfes (34) des Clips (32) ein um das Langloch (20) umlaufendes Dichtelement (46) ausgebildet ist, das an dem Rahmenelement (22) anliegt.

3. Halteeinrichtung nach Anspruch 2, **dadurch gekennzeichnet, dass** das Dichtelement eine um den Außenumfang des Kopfes (34) des Clips (32) umlaufende Dichtlippe (46) aufweist, die das Langloch (20) akustisch abdichtet.

4. Halteeinrichtung nach einem der Ansprüche 1 bis 3, **dadurch gekennzeichnet, dass** an dem Rahmenelement und/oder an dem Blendenelement (28) ein um den Clip (32) umlaufendes Dichtelement (48) ausgebildet ist.

5. Halteeinrichtung nach einem der Ansprüche 1 bis 4, **dadurch gekennzeichnet, dass** der Clip (32) das Blendenelement (28) an einer Fahrzeugtür festhält.

6. Halteeinrichtung nach einem der Ansprüche 1 bis 5, **dadurch gekennzeichnet, dass** der Clip (32) mittels einem Gesenk durch Spritzgießen gefertigt ist und zusätzlich in dem Kopf (34) des Clips (32) Öffnungen (40) zum Hindurchführen des Gesenks vorgesehen sind.

## Claims

1. A retaining device comprising a clip (32) for holding a cover element (28) on a frame element (22) of a door of a passenger car, wherein the clip (32) has four spring arms (38, 42) projecting in pairs opposite one another and a radially widened head (34), also comprising a slot (20) in the frame element (22) into which the clip (32) is insertable in a position in which spring arms in the form of opposite jaws (38) engage behind the edge region of the slot (20) on the side remote from the head (34), and the clip (32) is connectable to a component (26) which in co-operation with the cover element (28) firmly holds the cover element (28) on the frame element (22) **characterised in that** the clip (32) has a shank (36) with an axial circular opening (27) closed in the peripheral direction into which a screw (26) constituting the component is screwable, the screw thread being inserted through a passage opening in the cover element (28) and axially screwed into the opening (27), whereby the head of the screw (26), which is radially wider than the thread, secures the cover element (28) to the frame element (22) and the spring arms (38, 42) project from the shank, the two other oppositely disposed spring arms (42) centring the clip (32) in the longitudinal direction of the slot (20).

2. A retaining device according to claim 1, **characterised in that** a sealing element (46) surrounding the slot (20) and abutting the frame element (22) is formed on the underside of the head (34) of the clip (32) facing the frame element (22).

3. A retaining device according to claim 2, **characterised in that** the sealing element has a sealing lip (46) which surrounds the outer periphery of the head (34) of the clip (32) and acoustically seals the slot (20).

4. A retaining device according to claims 1 to 3, **characterised in that** a sealing element (48) surrounding the clip (32) is formed on the frame element and/or on the cover element (28).

5. A retaining device according to any of claims 1 to 4, **characterised in that** the clip (32) secures the cover element (28) to a vehicle door.

6. A retaining device according to any of claims 1 to 5, **characterised in that** the clip (32) is made by injection moulding, using a die, and openings (40) for inserting the die are additionally provided in the head (34) of the clip (32).

## Revendications

1. Installation de fixation comprenant une agrafe (32) pour fixer un élément de recouvrement (28) sur un élément de cadre (22) d'une portière d'un véhicule de tourisme,
l'agrafe (32) ayant quatre bras élastiques (38, 42) venant en saillie, deux à deux, ainsi qu'une tête (34) de dimension radiale élargie,
un trou oblong (20) dans l'élément de cadre (22) recevant l'agrafe (32) enfichée dans une position dans laquelle des bras élastiques installés en regard et réalisés comme des mors (38) viennent prendre derrière le bord du trou oblong (20) par le côté opposé à celui de la tête (34) et l'agrafe (32) est reliée à une pièce (26) qui, en coopérant avec l'élément de recouvrement (28), fixe l'élément de recouvrement (28) à l'élément de cadre (22),
**caractérisée en ce que**
l'agrafe (32) a un corps (36) ayant une ouverture (27) axiale, circulaire, fermée dans la direction périphérique, et dans laquelle une vis (26) formant la pièce et s'engage par son filetage à travers un orifice de passage de l'élément de recouvrement (28), et en se vissant axialement dans l'ouverture (27) elle maintient l'élément de recouvrement (28) contre l'élément de cadre (22) par la tête de la vis (26) radialement agrandie par rapport au filetage, et
les bras élastiques (38, 42) dépassent du corps (36), les deux autres bras élastiques (42) assurant le centrage de l'agrafe (32) dans la direction longitudinale du trou oblong (20).

2. Installation de fixation selon la revendication 1,
**caractérisée en ce que**
le côté inférieur de la tête (34) de l'agrafe (32), côté tourné vers l'élément de cadre (22), comporte un élément d'étanchéité (46) entourant le trou oblong (20) et s'appliquant contre l'élément de cadre (22).

3. Installation de fixation selon la revendication 2,
**caractérisée en ce que**
l'élément d'étanchéité a une lèvre d'étanchéité (46) qui tourne autour de la périphérie extérieure de la tête (34) de l'agrafe (32) et assure l'étanchéité acoustique du trou oblong (20).

4. Installation de fixation selon l'une des revendications 1 à 3,
**caractérisée par**
un élément d'étanchéité (48) entourant l'agrafe (32) sur l'élément de cadre et/ou l'élément de recouvrement (28).

5. Installation de fixation selon l'une des revendications 1 à 4,
**caractérisée en ce que**
l'agrafe (32) fixe l'élément de recouvrement (28) à la portière du véhicule.

6. Installation de fixation selon l'une des revendications 1 à 5,
**caractérisée en ce que**
l'agrafe (32) est fabriquée avec une matrice par injection et en plus la tête (34) de l'agrafe (32) comporte des ouvertures (40) pour le passage de la matrice.
